# EUROPÄISCHE PATENTSCHRIFT

(11) **EP 3 683 427 B1**
(45) Veröffentlichungstag und Bekanntmachung des Hinweises auf die Patenterteilung: **17.06.2026**
(21) Anmeldenummer: 20151743.0
(22) Anmeldetag: 14.01.2020
(51) Int. Cl.: F02D 21/08, F02M 26/22, F02D 41/22, F02D 41/02, F02D 35/02, F01N 3/10, F02D 41/14, F02D 41/04, F02D 41/00, F01N 3/035, F01N 9/00, F02D 37/02, F02P 5/04, F02M 26/04, F02M 26/00

(54) **ABGASNACHBEHANDLUNG EINES VERBRENNUNGSMOTORS**
EXHAUST GAS TREATMENT OF AN INTERNAL COMBUSTION ENGINE
POST-TRAITEMENT DES GAZ D'ÉCHAPPEMENT D'UN MOTEUR À COMBUSTION INTERNE

(30) Priorität: 16.01.2019 DE 102019101099; 15.02.2019 DE 102019103833
(43) Veröffentlichungstag der Anmeldung: 22.07.2020
(73) Patentinhaber: VOLKSWAGEN AG, 38440 Wolfsburg (DE)
(72) Erfinder: Grote, Andreas, 38176 Wendeburg (DE); Maas, Christian, 38179 Schwülper (DE); Block, Gerald, 38165 Lehre (DE); Brandes-Grote, Kerstin, 38176 Wendeburg (DE)
(74) Vertreter: Gulde & Partner

(56) Entgegenhaltungen:
- EP-A1- 3 421 766
- DE-A1- 102008 003 581
- DE-A1- 102010 033 005
- JP-A- H0 726 994
- US-A1- 2011 231 081
- US-A1- 2014 298 802
- US-A1- 2018 355 808

## Beschreibung

Die Erfindung betrifft ein Verfahren zur Abgasnachbehandlung eines Verbrennungsmotors, sowie ein Abgasnachbehandlungssystem zur Durchführung eines solchen Verfahrens gemäß dem Oberbegriff der unabhängigen Patentansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei ist es zur Einhaltung der zukünftigen Emissionsgrenzwerte (zum Beispiel EU7, US SULEV20) notwendig, einen Ottomotor durchgängig mit einem stöchiometrischen Verbrennungsluftgemisch zu betreiben, um eine funktionssichere Abgasnachbehandlung bei allen Betriebspunkten des Verbrennungsmotors zu gewährleisten. Bei modernen Verbrennungsmotoren, welche durch "Downsizing" eine sehr hohe spezifische Leistungsdichte aufweisen, kann bei hohen abgerufenen Motorleistungen die Abgastemperatur sehr stark ansteigen. Wird bei einem solchen Lastpunkt der Verbrennungsmotor mit einem stöchiometrischen Verbrennungsluftverhältnis betrieben, ergibt sich ein hoher Wärmeeintrag in die Abgasnachbehandlungskomponenten, welcher durch exotherme katalytische Reaktionen an den Abgasnachbehandlungskomponenten noch verstärkt werden kann. Dabei können Betriebstemperaturen der Abgasnachbehandlungskomponenten auftreten, welche oberhalb der dauerhaft zulässigen Materialgrenztemperatur liegen und schlussendlich zu einer thermischen Schädigung der Abgasnachbehandlungskomponenten bis hin zum Ausfall dieser Abgasnachbehandlungskomponenten führen können.

Aus dem Stand der Technik sind verschiedene Maßnahmen bekannt, um bei einem Volllastbetrieb des Verbrennungsmotors die Abgastemperatur zu senken. Eine erste Maßnahme zur Absenkung der Abgastemperatur ist eine Anreicherung des Verbrennungsluftgemischs im Volllastbetrieb. Dabei wird das Verbrennungsluftverhältnis in Richtung eines unterstöchiometrischen Verbrennungsluftverhältnisses verschoben. Somit ist nicht mehr genug Sauerstoff in den Brennräumen vorhanden, um den Kraftstoff vollständig zu verbrennen, was zu einer Kühlung der Verbrennung und des Abgases durch den unverbrannten Kraftstoff führt. Gleichzeitig steigen jedoch auch die Abgasemissionen, insbesondere die Emissionen an unverbrannten Kohlenwasserstoffen und Kohlenmonoxid sowie der Kraftstoffverbrauch.

Als weitere Maßnahme ist die Verwendung eines Abgaskühlers bekannt. Dabei wird die Kühlleistung so gewählt, dass die Abgastemperatur stromaufwärts des Einlasses der Abgasnachbehandlungskomponente derart gesenkt wird, dass eine thermische Schädigung der Abgasnachbehandlungskomponente vermieden wird. Dabei ist der zusätzliche Wärmeeintrag in die Abgasnachbehandlungskomponente durch eine exotherme Reaktion an der Abgasnachbehandlungskomponente zu berücksichtigen. Bei Verbrennungsmotoren mit hoher spezifischer Motorleistung sind jedoch hohe Kühlleistungen notwendig, um eine hinreichende Kühlung des Abgasstroms unter allen Betriebsbedingungen sicherzustellen. Dies führt zu großen Abgaskühlern, welchen einen hohen Bauraumbedarf aufweisen und das Gewicht eines Kraftfahrzeuges erhöhen. Daher werden solche Abgaskühler nur so groß ausgeführt, dass sie gerade die Funktion zum Bauteilschutz der Abgasnachbehandlungskomponenten erfüllen. Eine weitere Absenkung der Abgastemperatur im Rahmen eines Abgastemperaturmanagements kann daher nicht erfolgen. Darüber hinaus werden bei sehr hohen spezifischen Motorleistungen die Auslassventile sehr heiß und können mit dieser Maßnahme nicht abgekühlt werden, sodass ein stöchiometrischer Betrieb bei Volllast zu einer thermischen Schädigung der Auslassventile führen könnte.

Als weitere Maßnahme zur Reduzierung der Verbrennungstemperatur und der Abgastemperatur ist es bekannt, Wasser in die Brennräume des Verbrennungsmotors einzuspritzen. Obwohl eine solche Wassereinspritzung sehr wirkungsvoll ist, stehen den Vorteilen einige Nachteile gegenüber. Zum einen ist ein zusätzlicher Injektor zum Einbringen des Wassers notwendig. Ferner ist der Wasserverbrauch bei einem Lastprofil mit hohem Volllastanteil entsprechend hoch, was dazu führen kann, dass der Fahrer das Wasser ähnlich dem Kraftstoff bei jedem Tankstopp nachfüllen muss. Um eine Beschädigung des Verbrennungsmotors zu vermeiden, wird ein entmineralisiertes Wasser verwendet, was die Kosten für die Wassereinspritzung zusätzlich erhöht. Zudem sind Heizmaßnahmen für den Wassertank vorzusehen, um im Winter ein Einfrieren des Wassers zu vermeiden.

Aus der DE 10 2005 045 294 A1 ist ein Verfahren zur Abgasnachbehandlung eines Dieselmotors bekannt, bei welchem über eine Abgasrückführung Abgas zurück in den Ansaugtrakt geführt wird, um die Rohemissionen bei einer überstöchiometrischen Verbrennung, insbesondere die Stickoxid-Emissionen des Verbrennungsmotors zu reduzieren. Dabei wird das zurückgeführte Abgas durch einen Abgasrückführungskühler abgekühlt, um die Temperatur in den Brennräumen zu reduzieren und somit die Bildung von Stickoxiden zu verringern.

Aus der DE 10 2016 006 327 A1 sind eine Vorrichtung und ein Verfahren zur Anpassung eines Abgasrückführungsventils bekannt, um den Ladungswechsel zu optimieren und um die Verbrennungstemperatur herabzusetzen und somit der Erzeugung von Stickoxiden entgegenzuwirken. Dabei ist das Kraftfahrzeug vorzugsweise als Hybridfahrzeug ausgeführt und weist sowohl einen Verbrennungsmotor als auch einen Elektromotor auf, wobei die Lastanforderung an den Verbrennungsmotor durch ein Variieren der Leistung des Elektromotors angepasst wird.

Aus der DE 10 2016 111 366 A1 sind ein Verfahren und ein System zur Verbesserung eines Betriebs eines Verbrennungsmotors bei höheren Drehzahlen und Lasten bekannt. Dabei kann Kraftstoff in die Abgasanlage des Verbrennungsmotors eingespritzt werden, um die thermische Belastung der Abgasnachbehandlungskomponenten zu reduzieren, wenn der Verbrennungsmotor bei höheren Drehzahlen und hoher Last betrieben wird.

Die US 2014/0298802 A1 beschreibt ein Verfahren zum Betreiben eines mittels eines Abgasturboladers aufgeladenen Verbrennungsmotors mit einer Abgasrückführung, welche die Abgasanlage stromabwärts der Turbine des Abgasturboladers mit dem Absaugtrakt des Verbrennungsmotors stromaufwärts des Verdichters verbindet, wobei an dem Verdichter und der Turbine jeweils ein Bypassventil angeordnet sind. Dabei wird bei einer Verzögerung des Kraftfahrzeuges das Bypassventil, welches den Verdichter umgeht, geschlossen und das Bypassventil, welches die Turbine umgeht, geöffnet.

Aus der US 2018/0355808 A1 ist ein Verfahren zur Steuerung eines Verbrennungsmotors mit einer Abgasrückführung, welche die Abgasanlage mit dem Ansaugtrakt des Verbrennungsmotors verbindet, bekannt, wobei die Abgasrückführungsrate über die Abgasrückführung erhöht wird, wenn die Abgastemperatur einen definierten Schwellenwert übersteigt.

US 2011/0231081 A1 beschreibt ein Verfahren zur Steuerung eines Verbrennungsmotors mit variablem Ventiltrieb durch eine genaue Abschätzung eines aktuellen Wertes einer Temperatur einer Abgasvorrichtung. Das Verfahren berechnet eine Temperatur eines Abgases des Verbrennungsmotors auf Basis von Betriebsparametern des Verbrennungsmotors und schätzt eine Temperatur einer Abgasnachbehandlungskomponente anhand der Abgastemperatur sowie des Volumenstroms durch die Abgasanlage ab. Dabei wird die Abgastemperatur durch eine Anpassung der Abgasrückführungsrate verringert.

DE 10 2010 033 005 A1 offenbart ein Verfahren zum Betreiben einer aufgeladenen Brennkraftmaschine, insbesondere eines Kraftfahrzeugs, bei dem zumindest im Magerbereich mit Magerbetriebsarten gleichzeitig eine interne Abgasrückführung und eine externe Abgasrückführung durchgeführt werden und bei dem im Magerbereich eine Abgasrückführrate der externen Abgasrückführung mit zunehmender Last und/oder Drehzahl der Brennkraftmaschine erhöht wird.

Aus der JP H07 26994A ist ein Verbrennungsmotor mit einer mechanischen Aufladung bekannt. Dabei wird ein Verfahren vorgeschlagen, bei dem die Verbrennungstemperatur in den Brennräumen des Verbrennungsmotors durch eine Erhöhung der Abgasrückführungsrate abgesenkt wird, um eine Selbstentzündung des Kraftstoff-Luft-Gemischs in den Brennräumen und eine daraus resultierende Beschädigung des Verbrennungsmotors zu vermeiden.

DE 10 2008 003 581 A1 beschreibt ein Verfahren und eine Vorrichtung zur Verringerung der Abgastemperatur bei einem Kraftfahrzeug, wie beispielsweise einem Kraftfahrzeug mit einem Ottomotor. Dabei wird bestimmt, ob die Temperatur eines Bauteils des Motors, welches von der Abgastemperatur des Motors beeinflusst wird, einen vorbestimmten Schwellenwert überschreitet hat, oder ob die Abgastemperatur des Motors einen vorbestimmten Schwellenwert überschreitet, und bei einer Überschreitung des Schwellenwertes die Abgastemperatur abgesenkt, in dem der Zündwinkel des Motors vor den oberen Totpunkt des Kurbelwinkels einer Kurbelwelle zur Durchführung einer Frühzündung verlagert wird.

Die EP 3 241 766 A1 offenbart eine Steuervorrichtung für einen Verbrennungsmotor. Die Steuervorrichtung umfasst eine Zustandsmengeneinstellvorrichtung, eine Zündkerze und ein Steuergerät. Die Zündkerze zündet ein Luft-Kraftstoff-Gemisch zu einem vorbestimmten Zündzeitpunkt, so dass unverbranntes Luft-Kraftstoff-Gemisch durch Selbstzündung nach Beginn der Verbrennung des Luft-Kraftstoff-Gemisches durch die Zündung verbrennt. Ferner stellt die Steuerung ein Wärmemengenverhältnis in Übereinstimmung mit einem Betriebszustand des Verbrennungsmotors durch eine Änderung des Zündzeitpunkts ein.

Der Erfindung liegt nun die Aufgabe zugrunde, einen Verbrennungsmotor in allen Betriebspunkten mit einem stöchiometrischen Verbrennungsluftverhältnis betreiben zu können, um eine effiziente Abgasnachbehandlung zu ermöglichen und die aus dem Stand der Technik bekannten Nachteile zu überwinden.

Erfindungsgemäß wird diese Aufgabe durch ein Verfahren zur Abgasnachbehandlung eines Verbrennungsmotors gemäß Anspruch 1 gelöst. Das Verfahren zur Abgasnachbehandlung betrifft einen Verbrennungsmotor mit mindestens einem Brennraum, dessen Einlass mit einem Ansaugtrakt und dessen Auslass mit einer Abgasanlage des Verbrennungsmotors verbunden ist, gelöst. Dabei ist an jedem Brennraum mindestens eine Zündquelle (zum Beispiel Zündkerze) angeordnet, um ein stöchiometrisches Verbrennungsluftgemisch in dem Brennraum zu zünden. Die Abgasanlage weist einen Abgaskanal auf, in welchem mindestens eine Abgasnachbehandlungskomponente, insbesondere ein Drei-Wege-Katalysator, ein Ottopartikelfilter oder ein Vier-Wege-Katalysator angeordnet ist. Die Abgasanlage ist über eine Abgasrückführung mit dem Ansaugtrakt des Verbrennungsmotors verbunden, wobei in der Abgasrückführung ein Abgasrückführungskühler angeordnet ist. Das erfindungsgemäße Verfahren umfasst folgende Schritte:
- Betreiben des Verbrennungsmotors mit einem stöchiometrischen Verbrennungsluftgemisch (λ = 1), wobei das Abgas des Verbrennungsmotors durch die Abgasnachbehandlungskomponente gereinigt wird,
- Ermitteln eines Betriebspunktes des Verbrennungsmotors, wobei eine Abgasrückführungsrate bei konstantem Lastpunkt des Verbrennungsmotors angepasst wird, um die Abgastemperatur zu verändern.

Die Voraussetzung zur Durchführung eines solchen Verfahrens ist das Vorhandensein einer Abgasrückführung. Mit dieser Abgasrückführung lassen sich in definierten Grenzen, insbesondere im Bereich von 0 % bis 25 % Massenanteil des Abgases, beliebige Abgasrückführungsraten einstellen. In Kombination mit einer geeigneten Motorsteuerstrategie wird der jeweilige Lastpunkt des Verbrennungsmotors konstant gehalten und die Abgastemperatur über eine Veränderung der Abgasrückführungsrate angepasst. Dadurch ist es möglich, den Verbrennungsmotor auch bei hoher Last und/oder hoher Drehzahl mit hoher spezifischer Leistung und einem stöchiometrischen Verbrennungsluftverhältnis zu betreiben, ohne die Auslassventile des Verbrennungsmotors und/oder die Abgasnachbehandlungskomponenten thermisch zu schädigen.

Durch die in den abhängigen Ansprüchen aufgeführten zusätzlichen Merkmale sind Verbesserungen und nicht triviale Weiterentwicklungen des im unabhängigen Anspruch angegebenen Verfahrens zur Abgasnachbehandlung eines Verbrennungsmotors möglich.

In einer nicht zur Erfindung gehörenden Ausführungsform des Verfahrens ist vorgesehen, dass zusätzlich der Zündzeitpunkt der Zündeinrichtung bei konstantem Lastpunkt des Verbrennungsmotors verschoben wird, um die Abgastemperatur anzupassen. Neben der Abgasrückführung kann die Abgastemperatur auch durch andere motorische Parameter beeinflusst werden. So führt beispielsweise eine Spätverstellung des Zündzeitpunktes in den Brennräumen bei konstant gehaltenem Lastpunkt zu einer Erhöhung der Abgastemperatur bei einer gleichzeitigen Erhöhung des Abgasmassenstroms, da der thermische Wirkungsgrad des Verbrennungsmotors bei einer Verstellung des Zündzeitpunktes in Richtung "spät" abnimmt. Kombiniert man verfahrenstechnisch die Effekte der Abgasrückführung mit denen einer Zündwinkelverstellung, so kann bei gleichbleibendem Lastpunkt und gleichbleibenden Abgastemperaturen der Abgasmassenstrom verändert werden.

Erfindungsgemäß ist vorgesehen, dass die Abgasrückführungsmenge bei konstantem Lastpunkt des Verbrennungsmotors erhöht wird, um die Abgastemperatur zu senken. Für einen beispielhaften Arbeitspunkt des Verbrennungsmotors lassen sich auf diese Art die Abgastemperatur sowohl stromaufwärts des Katalysators als auch stromabwärts des Katalysators um bis zu 120°C reduzieren. Darüber hinaus kann eine erhöhte Abgasrückführungsrate dazu genutzt werden, die durch die exotherme Reaktion auf der Oberfläche des Katalysators freigesetzte Wärme zu reduzieren. Dieser Effekt ist auch an anderen Lastpunkten des Verbrennungsmotors darstellbar. Dabei können die Leistung und das abgegebene Drehmoment des Verbrennungsmotors konstant gehalten werden, sodass diese Maßnahme für den Fahrer eines Kraftfahrzeuges nicht spürbar ist und somit weder zu Einbußen beim Komfort noch bei den Fahrleistungen des Kraftfahrzeuges führt.

Erfindungsgemäß ist vorgesehen, dass eine Brennraumtemperatur und/oder eine Abgastemperatur ermittelt wird, wobei die Abgasrückführungsrate der Abgasrückführung erhöht wird, wenn die Brennraumtemperatur oder die Abgastemperatur jeweils einen definierten Schwellenwert übersteigt. Somit lassen sich mithilfe einer über die Abgastemperatur oder die Brennraumtemperatur gesteuerten oder geregelten Abgasrückführung Abgastemperaturen einstellen, welche funktionssicher die maximal zulässige Bauteiltemperatur der Abgasnachbehandlungskomponenten nicht überschreiten. Darüber hinaus ist es möglich, ein aktives Temperaturmanagement derart zu gestalten, dass unterschiedliche Abgasmassenströme bei gleichgehaltenen Lastpunkten und gleichgehaltenen Abgastemperaturen eingestellt werden können.

In einer nicht zur Erfindung gehörenden Ausführungsform des Verfahrens ist vorgesehen, dass eine Abgastemperatur des Verbrennungsmotors konstant gehalten wird, indem die Abgasrückführungsrate und der Zündzeitpunkt des Verbrennungsgemischs in den Brennräumen angepasst werden. Durch eine konstante Abgastemperatur können beispielsweise die Katalysatoren an einem maximaleffizienten Betriebspunkt betrieben werden, sodass eine besonders effiziente Konvertierung der im Abgasstrom des Verbrennungsmotors vorhandenen Schadstoffe möglich ist. Alternativ kann eine konstante Abgastemperatur notwendig sein, um einen Ottopartikelfilter oder einen Vier-Wege-Katalysator zu regenerieren. Dabei kann eine Temperatur eingestellt werden, welche oberhalb oder unterhalb derjenigen Temperatur liegt, welche sich bei einem maximal effizienten oder emissionsoptimalen Betriebspunkt des Verbrennungsmotors einstellen würde.

In einer bevorzugten Ausführungsform des Verfahrens ist vorgesehen, dass die Abgasrückführungsrate über ein Abgasrückführungsventil in der Abgasrückführung gesteuert oder regelt wird. Ein Abgasrückführungsventil ist eine einfache und vergleichsweise kostengünstige Möglichkeit, den Abgasrückführmassenstrom des Verbrennungsmotors einzustellen. Zudem kann durch das Abgasrückführungsventil verhindert werden, dass Frischluft über die Abgasrückführung unkontrolliert in den Abgaskanal gefördert wird und somit die Abgasnachbehandlung negativ beeinflusst.

Erfindungsgemäß wird ein Abgasnachbehandlungssystem für einen Verbrennungsmotor mit mindestens einem Brennraum, dessen Einlass mit einem Ansaugtrakt und dessen Auslass mit einer Abgasanlage des Verbrennungsmotors verbunden sind, vorgeschlagen, wobei an jedem Brennraum mindestens eine Zündeinrichtung angeordnet ist, um ein stöchiometrisches Verbrennungsluftgemisch in dem Brennraum zu zünden. Dabei weist die Abgasanlage einen Abgaskanal auf, in welchem mindestens eine Abgasnachbehandlungskomponente, insbesondere ein Drei-Wege-Katalysator, ein Ottopartikelfilter oder ein Vier-Wege-Katalysator, angeordnet ist. Die Abgasanlage ist über eine Abgasrückführung mit dem Ansaugtrakt des Verbrennungsmotors verbunden, wobei in der Abgasrückführung ein Abgasrückführungskühler angeordnet ist. Dem Verbrennungsmotor ist ein Motorsteuergerät zugeordnet, mit welchem ein erfindungsgemäßes Verfahren ausgeführt wird, wenn ein maschinenlesbarer Programmcode durch das Motorsteuergerät ausgeführt wird. Durch ein erfindungsgemäßes Abgasnachbehandlungssystem können die Abgastemperaturen bei einem Ottomotor eingestellt und insbesondere reduziert werden, sodass im gesamten Betriebsbereich ohne zusätzliche Kühlmaßnahmen ein stöchiometrischer Betrieb des Verbrennungsmotors möglich ist. Dies ermöglicht an sämtlichen Betriebspunkten des Verbrennungsmotors eine optimale Abgasnachbehandlung und somit minimale Emissionen.

In einer bevorzugten Ausführungsform des Abgasnachbehandlungssystems ist vorgesehen, dass in der Abgasrückführung ein Abgasrückführungsfilter und/oder ein Abgasrückführungskatalysator angeordnet ist. Durch einen Abgasrückführungsfilter kann verhindert werden, dass Rußpartikel oder sonstige Partikel über die Abgasrückführung in den Ansaugtrakt gelangen und dort den Verdichter des Abgasturboladers beschädigen. Durch einen Abgasrückführungskatalysator kann verhindert werden, dass neben den gewünschten Abgaskomponenten, insbesondere Kohlenstoffdioxid, auch weitere Abgaskomponenten in den Ansaugtrakt gelangen, welche die Rohemissionen des Verbrennungsmotors erhöhen würden. Zudem kann die Klopfneigung bei der Verbrennung des Kraftstoffluftgemischs in den Brennräumen des Verbrennungsmotors reduziert werden, wobei das Kraftstoffluftgemisch durch die Abgasrückführung eine Inertisierung erfährt und dadurch die Neigung zur Selbstentzündung verringert wird. Somit können die Emissionen des Verbrennungsmotors insbesondere dann nochmals verringert werden, wenn die Abgasrückführung stromaufwärts des Drei-Wege-Katalysators oder des Vier-Wege-Katalysators aus dem Abgaskanal abzweigt.

In einer vorteilhaften Ausführungsform der Erfindung ist vorgesehen, dass der Abgasrückführungskühler als Wärmetauscher, insbesondere als Kreuzstrom- oder Gegenstromwärmetauscher, ausgeführt ist, welcher mit dem Kühlmittelkreislauf des Verbrennungsmotors verbunden ist und von dem Kühlmittel des Verbrennungsmotors durchströmt wird. Durch das Kühlmittel des Verbrennungsmotors ist eine hocheffiziente Kühlung des Abgasstroms möglich. Zudem ist kein zusätzlicher Kühlmittelkreislauf notwendig, welcher zusätzliche Leistung erfordern würde und somit den Wirkungsgrad des Verbrennungsmotors reduzieren würde.

In einer vorteilhaften Ausführungsform des Abgasnachbehandlungssystems ist vorgesehen, dass in der Abgasanlage mindestens ein Abgassensor angeordnet ist. Durch einen Abgassensor kann die Abgaszusammensetzung oder die Konzentration zumindest eines im Abgasstrom des Verbrennungsmotors vorhandenen Schadstoffs ermittelt werden. Dabei kann insbesondere die Konzentration von Stickoxiden, Kohlenwasserstoffen oder Kohlenmonoxid im Abgas ermittelt werden. Die Ergebnisse des Abgassensors werden an das Motorsteuergerät des Verbrennungsmotors übertragen und können dort genutzt werden, um die Abgasnachbehandlung zu optimieren.

In einer vorteilhaften Ausführungsform der Erfindung ist vorgesehen, dass die Abgasrückführung als eine Niederdruck-Abgasrückführung ausgebildet ist, wobei die Abgasrückführungsleitung stromabwärts einer Turbine eines Abgasturboladers aus dem Abgaskanal abzweigt und stromaufwärts eines Verdichters des Abgasturboladers in den Ansaugkanal einmündet. Durch eine Niederdruck-Abgasrückführung kann vergleichsweise kaltes Abgas, welches sich beim Durchströmen der Turbine des Abgasturboladers bereits abgekühlt hat, zurückgeführt werden, wodurch eine besonders effiziente Herabsetzung der Verbrennungstemperatur möglich ist.

Besonders bevorzugt ist dabei, wenn die Abgasrückführung stromabwärts eines Ottopartikelfilters oder eines Vier-Wege-Katalysators aus dem Abgaskanal abzweigt. Zweigt die Abgasrückführung stromabwärts des Ottopartikelfilters oder des Vier-Wege-Katalysators aus dem Abgaskanal ab, kann auf einen Abgasrückführungsfilter verzichtet werden, da die Feststoffe aus dem Abgasstrom bereits durch den Ottopartikelfilter oder den Vier-Wege-Katalysator herausgefiltert wurden. Dadurch kann die Abgasrückführung vereinfacht und somit kostengünstiger ausgeführt werden.

Alternativ ist mit Vorteil vorgesehen, dass die Abgasrückführung als Hochdruck-Abgasrückführung ausgebildet ist, wobei die Abgasrückführungsleitung stromabwärts eines Auslasses des Verbrennungsmotors und stromaufwärts einer Turbine eines Abgasturboladers aus dem Abgaskanal abzweigt und stromabwärts eines Verdichters des Abgasturboladers in den Ansaugkanal einmündet. Eine Hochdruck-Abgasrückführung kann besonders kompakt und mit kurzen Abgasrückführungsleitungen ausgeführt werden. Dadurch kann eine solche Hochdruckabgasrückführung mit geringem Bauraumbedarf umgesetzt werden und ebenfalls effizient dazu beitragen, sowohl die Temperatur in den Brennräumen des Verbrennungsmotors als auch die Abgastemperatur des Verbrennungsmotors herabzusetzen.

Alternativ kann die Abgasrückführung auch stromabwärts eines Auslasses des Verbrennungsmotors und stromaufwärts einer Turbine eines Abgasturboladers aus dem Abgaskanal abzweigen und stromaufwärts eines Verdichters des Abgasturboladers in den Ansaugkanal einmünden.

In einer weiteren Verbesserung des Abgasnachbehandlungssystem ist vorgesehen, dass im Abgaskanal stromaufwärts eines Drei-Wege-Katalysators oder stromaufwärts eines Vier-Wege-Katalysators eine Lambdasonde, insbesondere eine Breitband-Lambda-Sonde angeordnet ist, mit welcher ein stöchiometrisches Verbrennungsluftverhältnis des Verbrennungsmotors eingeregelt wird. Durch eine Lambdasonde, welche vorzugsweise stromabwärts der Turbine des Abgasturboladers und stromaufwärts des Drei-Wege-Katalysators oder Vier-Wege-Katalysators angeordnet ist, ist eine besonders einfache und genaue Regelung des Verbrennungsluftverhältnisses des Verbrennungsmotors möglich. Dadurch kann das Verbrennungsluftverhältnis auf ein im Mittel stöchiometrisches Verbrennungsluftverhältnis eingeregelt werden, sodass eine maximaleffiziente Abgasnachbehandlung des Abgasstroms durch die Abgasnachbehandlungskomponenten möglich ist.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den verschiedenen Figuren mit gleichen Bezugszeichen gekennzeichnet. Es zeigen:
- Figur 1: ein bevorzugtes Ausführungsbeispiel eines schematisch dargestellten Verbrennungsmotors mit einem Ansaugtrakt und einer Abgasanlage zur Durchführung eines erfindungsgemäßen Verfahrens zur Abgasnachbehandlung;
- Figur 2: Diagramme mit den Temperaturverläufen stromabwärts der Turbine des Abgasturboladers und stromabwärts des Katalysators sowie die Temperaturänderung über den Katalysator bei Durchführung eines erfindungsgemäßen Verfahrens zur Abgasnachbehandlung, zweites Ausführungsbeispiel eines Verbrennungsmotors mit einer erfindungsgemäßen Vorrichtung zur Abgasnachbehandlung;
- Figuren 3 - 5: weitere Ausführungsbeispiele für Verbrennungsmotoren, in deren Abgasanlagen jeweils ein Drei-Wege-Katalysator angeordnet ist, und welche eine Abgasrückführung zur Durchführung eines erfindungsgemäßen Verfahrens zur Abgasnachbehandlung aufweisen;
- Figuren 6 - 9: Ausführungsbeispiele für Verbrennungsmotoren, in deren Abgasanlagen jeweils ein Vier-Wege-Katalysator angeordnet ist, und welche eine Abgasrückführung zur Durchführung eines erfindungsgemäßen Verfahrens zur Abgasnachbehandlung aufweisen;
- Figuren 10 - 19: Ausführungsbeispiele für Verbrennungsmotoren, in deren Abgasanlagen jeweils ein Drei-Wege-Katalysator und ein Ottopartikelfilter angeordnet sind, und welche eine Abgasrückführung zur Durchführung eines erfindungsgemäßen Verfahrens zur Abgasnachbehandlung aufweisen; und
- Figuren 20 - 31: Ausführungsbeispiele für Verbrennungsmotoren, in deren Abgasanlagen jeweils ein Drei-Wege-Katalysator, ein Drei-Wege-Katalysator und ein Ottopartikelfilter oder ein Vier-Wege-Katalysator angeordnet sind, und bei denen jeweils in der Abgasrückführung zusätzlich ein weiterer Katalysator und/oder Filter angeordnet ist.

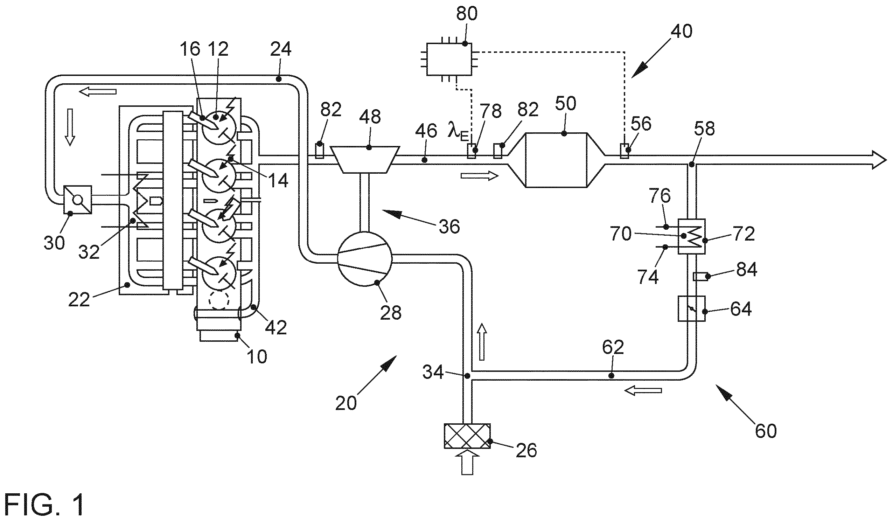

Figur 1 zeigt die schematische Darstellung eines Verbrennungsmotors 10 mit einem Ansaugtrakt 20 und einer Abgasanlage 40. Der Verbrennungsmotor 10 ist als ein direkteinspritzender Ottomotor ausgeführt und weist mehrere Brennräume 12 auf. An den Brennräumen 12 ist jeweils ein Kraftstoffinjektor 16 zur Einspritzung eines Kraftstoffs in den jeweiligen Brennraum 12 und jeweils eine Zündkerze 14 zur Zündung eines Kraftstoff-Luft-Gemischs angeordnet. Der Brennraum 12 wird durch einen Kolben 18 begrenzt, welcher in einer Zylinderbohrung des Verbrennungsmotors 10 linear verschiebbar angeordnet ist. Der Kolben 18 ist über einen Pleuel mit einer Kurbelwelle des Verbrennungsmotors 10 verbunden, welche die Leistung des Verbrennungsmotors 10 auf eine mit einem Getriebe verbindbare Abtriebswelle überträgt. Der Verbrennungsmotor 10 ist mit seinem Einlass 22 mit einem Luftversorgungssystem 20 und mit seinem Auslass 42 mit einer Abgasanlage 40 verbunden. An den Brennräumen 12 sind Einlassventile 38 und Auslassventile 44 angeordnet, mit welchen eine fluidische Verbindung vom Ansaugtrakt 20 zu den Brennräumen 12 oder von den Brennräumen 12 zur Abgasanlage 40 geöffnet oder verschlossen werden kann.

Das Luftversorgungssystem 20 umfasst einen Ansaugkanal 24, in welchem in Strömungsrichtung von Frischluft durch den Ansaugkanal 24 ein Luftfilter 26, stromabwärts des Luftfilters 26 ein Verdichter 28 eines Abgasturboladers 36, stromabwärts des Verdichters 28 eine Drosselklappe 30 und weiter stromabwärts ein Ladeluftkühler 32 angeordnet sind. Zusätzlich kann im Ansaugtrakt 20 ein Luftmassenmesser angeordnet sein, um die den Brennräumen 12 des Verbrennungsmotors zugeführte Luftmenge zu bestimmen. Dabei kann der Luftmassenmesser auch in einem Filtergehäuse des Luftfilters 26 integriert sein, sodass der Luftfilter 26 und der Luftmassenmesser eine Baugruppe ausbilden. Stromabwärts des Luftfilters 26 und stromaufwärts des Verdichters 28 ist eine Einmündung 34 vorgesehen, an welcher eine Abgasrückführungsleitung 62 einer Abgasrückführung 60 in den Ansaugkanal 24 mündet. Alternativ zu einem Kraftstoffinjektor 16, welcher den Kraftstoff in die Brennräume 12 des Verbrennungsmotors 10 einspritzt, kann auch eine Einspritzung von Kraftstoff in den Ansaugtrakt 20 erfolgen.

Die Abgasanlage 40 umfasst einen Abgaskanal 46, in welchem in Strömungsrichtung eines Abgases des Verbrennungsmotors 10 durch den Abgaskanal 46 eine Turbine 48 des Abgasturboladers 36 angeordnet ist, welche den Verdichter 28 im Ansaugtrakt 20 über eine Welle antreibt. Der Abgasturbolader 36 kann als Abgasturbolader 36 mit variabler Turbinengeometrie ausgeführt sein. Dazu sind einem Turbinenrad der Turbine 48 verstellbare Leitschaufeln vorgeschaltet, über welche die Anströmung des Abgases auf die Schaufeln der Turbine 48 variiert werden kann. Stromabwärts der Turbine 48 ist mindestens eine Abgasnachbehandlungskomponente 50, 52, 54 im Abgaskanal 46 des Verbrennungsmotors 10 angeordnet. Dabei ist in dem in Figur 1 dargestellten Ausführungsbeispiel unmittelbar stromabwärts der Turbine 48 des Abgasturboladers 36 als erste Komponente der Abgasnachbehandlung ein Drei-Wege-Katalysator 50 angeordnet. Stromabwärts des Drei-Wege-Katalysators 50 zweigt an einer Verzweigung 58 eine Abgasrückführung 60 aus dem Abgaskanal 46 ab und verbindet den Abgaskanal 46 mit dem Ansaugkanal 24 stromabwärts des Luftfilters 26 und stromaufwärts des Verdichters 28 des Abgasturboladers 36. Stromabwärts der Verzweigung 58 kann eine Abgasklappe vorgesehen sein, um die Abgasrückführungsrate durch die Abgasrückführung 60 zu steuern.

Die Abgasrückführung 60 umfasst neben der Abgasrückführungsleitung 62 einen Abgasrückführungskühler 70 und ein Abgasrückführungsventil 64, über welches die Abgasrückführung durch die Abgasrückführungsleitung 62 steuerbar ist. In dem Abgaskanal 46 kann eine Abgastemperatur durch einen Temperatursensoren 82 erfasst werden oder durch das Motorsteuergerät 80 berechnet werden, um die Abgasrückführung 60 zu aktivieren, sobald die Abgastemperatur T_{EG} einen definierten Schwellenwert überschritten hat. An der Abgasrückführungsleitung 62 der Abgasrückführung 60 kann ein weiterer Temperatursensor 84 vorgesehen werden, um die Temperatur des zurückgeführten Abgases stromabwärts des Abgasrückführungskühlers 70 zu ermitteln. Dadurch kann vermieden werden, dass das zurückgeführte Abgas so stark gekühlt wird, dass der Taupunkt unterschritten wird und es zu einem Auskondensieren von Wassertropfen in der Abgasrückführungsleitung 62 kommt. Somit kann verhindert werden, dass Wasserdampf oder im Abgas enthaltene Gaskomponenten auskondensieren und in der Abgasrückführung 60 oder im Ansaugtrakt 20 zu Beschädigungen oder Ablagerungen führen. Der Abgasrückführungskühler 70 ist vorzugsweise als Kreuzstrom-, Gegenstrom- oder Parallelstrom-Wärmetauscher 72 ausgeführt und ist mit dem Kühlmittelkreislauf des Verbrennungsmotors 10 verbunden. Dazu weist der Abgasrückführungskühler 70 einen Zulauf 74 und einen Ablauf 76 auf, über welche das Kühlmittel in den Abgasrückführungskühler 70 ein- und ausströmt.

In der Abgasanlage 40 ist stromabwärts der Turbine 48 des Abgasturboladers 36 und stromaufwärts des Drei-Wege-Katalysators 50 eine Lambdasonde 78 angeordnet, um das Verbrennungsluftverhältnis λ_{E} des Verbrennungsmotors 10 zu regeln. Dazu ist die Lambdasonde 78 mit einem Motorsteuergerät 80 des Verbrennungsmotors 10 verbunden, über welches u.a. die Einspritzmenge an Kraftstoff in die Brennräume 12 und der Zündzeitpunkt sowie die Stellung der Drosselklappe 30 gesteuert werden. Ferner kann im Abgaskanal 46 ein weiterer Abgassensor 56 und/oder ein Temperatursensor 82 vorgesehen sein.

Im Fahrbetrieb eines Kraftfahrzeuges wird der Verbrennungsmotor 10 mit einem stöchiometrischen Verbrennungsluftverhältnis betrieben. Steigt die Brennraumtemperatur T_{CC} oder die Abgastemperatur T_{EG} aufgrund einer hohen Leistungsanforderung an den Verbrennungsmotor 10 über einen kritischen Schwellenwert an, so wird aus Gründen des thermischen Bauteilschutzes die Abgasrückführungsrate erhöht, um die Temperatur im Brennraum 12 und in der Abgasanlage 40 zu senken.

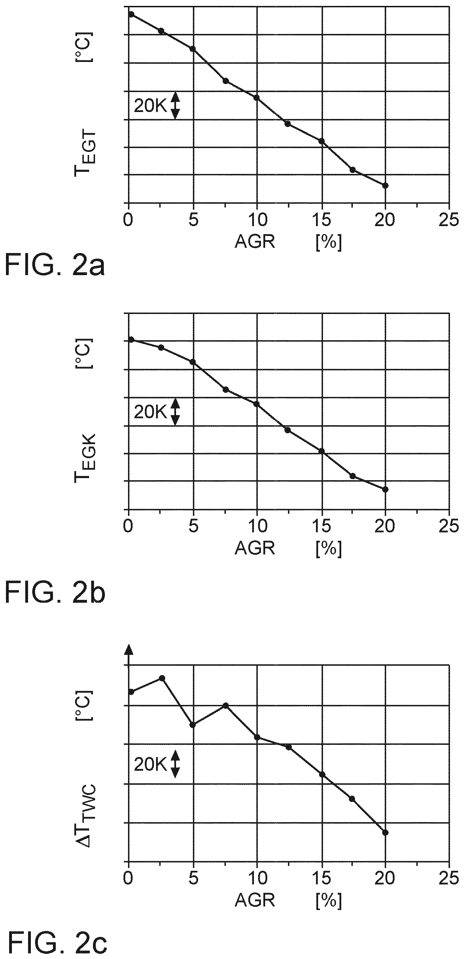

Wie aus Figur 2a ersichtlich ist, stellt sich jetzt in Abhängigkeit von der gewählten Abgasrückführungsrate eine Abgastemperatur T_{EGT} stromabwärts der Turbine 48 des Abgasturboladers 36 und stromaufwärts des Drei-Wege-Katalysators ein, welche umso niedriger ausfällt, je höher die Abgasrückführungsrate gewählt wurde. Parallel sinkt auch, wie in Figur 2b dargestellt, die Abgastemperatur T_{EGK} stromabwärts des Drei-Wege-Katalysators 50. Wie in Abbildung 2c zu erkennen ist, kann die gewählte Abgasrückführungsrate dazu beitragen, die Exotherme, welche sich im Drei-Wege-Katalysator 50 aus exothermen Nachreaktionen von unverbrannten Kraftstoffkomponenten einstellt, zu reduzieren.

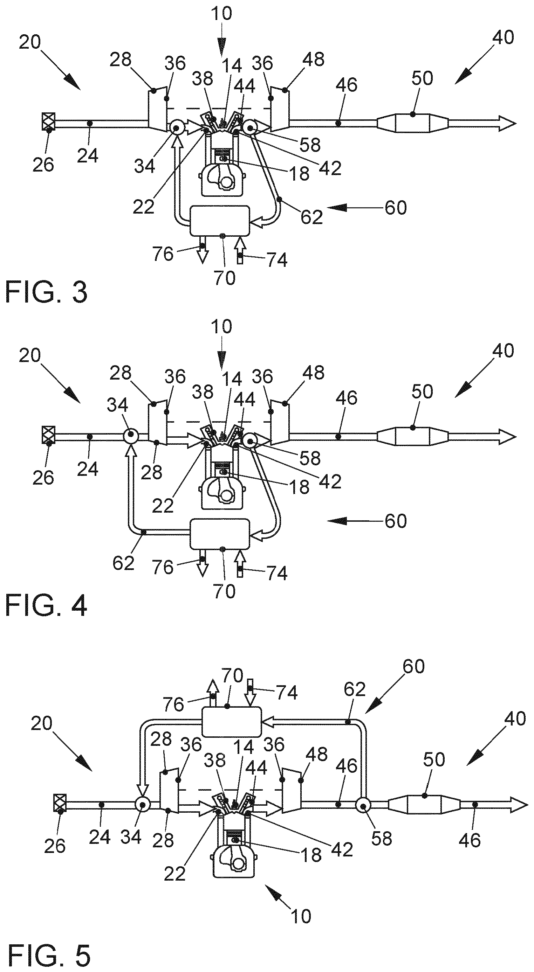

In Figur 3 ist ein weiteres Ausführungsbeispiel eines Verbrennungsmotors 10 mit einem Ansaugtrakt 20 und einer Abgasanlage 40 dargestellt. Bei im Wesentlichen gleichem Aufbau wie zu Figur 1 ausgeführt, ist die Abgasrückführung 60 in diesem Ausführungsbeispiel als Hochdruck-Abgasrückführung ausgeführt und zweigt stromabwärts des Auslasses 42 des Verbrennungsmotors 10 und stromaufwärts der Turbine 48 des Abgasturboladers 36 aus dem Abgaskanal 46 ab und mündet stromabwärts des Verdichters 28 und stromaufwärts des Einlasses 22 in den Ansaugkanal 24.

In Figur 4 ist ein weiteres Ausführungsbeispiel eines Verbrennungsmotors 10 mit einem Ansaugtrakt 20 und einer Abgasanlage 40 dargestellt. Bei im Wesentlichen gleichem Aufbau wie zu Figur 1 ausgeführt, zweigt die Abgasrückführung 60 stromabwärts des Auslasses 42 des Verbrennungsmotors 10 und stromaufwärts der Turbine 48 des Abgasturboladers 36 aus dem Abgaskanal 46 ab und mündet stromabwärts des Luftfilters 26 und stromaufwärts des Verdichters 28 in den Ansaugkanal 24.

In Figur 5 ist ein weiteres Ausführungsbeispiel eines Verbrennungsmotors 10 mit einem Ansaugtrakt 20 und einer Abgasanlage 40 dargestellt. Bei im Wesentlichen gleichem Aufbau wie zu Figur 1 ausgeführt, zweigt die Abgasrückführung 60 in diesem Ausführungsbeispiel stromabwärts der Turbine 48 und stromaufwärts des Drei-Wege-Katalysators 50 aus dem Abgaskanal 46 ab und mündet stromabwärts des Luftfilters 26 und stromaufwärts des Verdichters 28 in den Ansaugkanal 24.

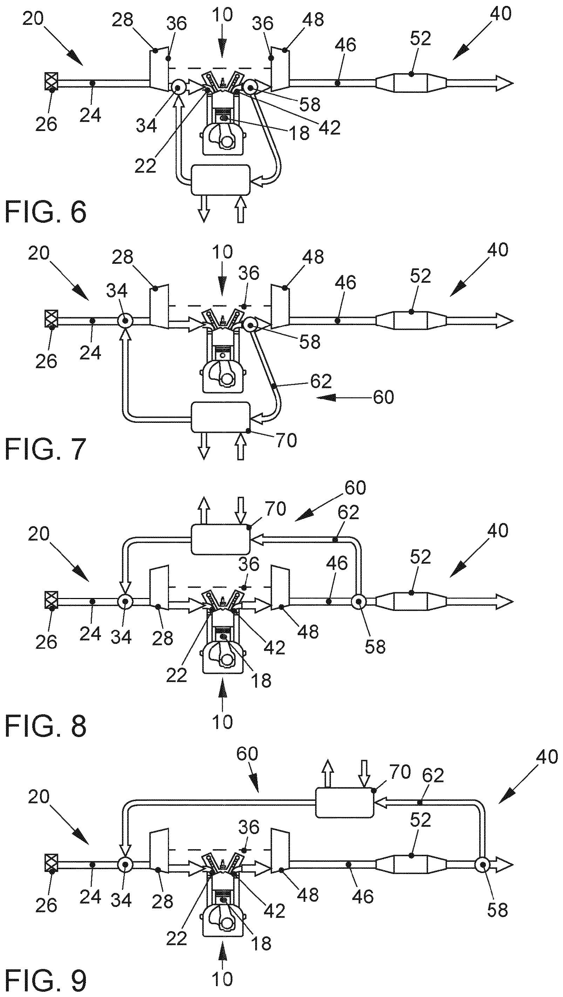

Figur 6 zeigt ein weiteres Ausführungsbeispiel eines Verbrennungsmotors 10. Bei im Wesentlichen gleichem Aufbau wie zu Figur 3 ausgeführt ist im Abgaskanal 46 anstelle eines Drei-Wege-Katalysators 50 ein Vier-Wege-Katalysator 52 angeordnet.

Figur 7 zeigt ein weiteres Ausführungsbeispiel eines Verbrennungsmotors 10. Bei im Wesentlichen gleichem Aufbau wie zu Figur 4 ausgeführt ist der Drei-Wege-Katalysator 50 im Abgaskanal 46 durch einen Vier-Wege-Katalysator 52 ersetzt.

Figur 8 zeigt ein weiteres Ausführungsbeispiel eines Verbrennungsmotors 10. Bei im Wesentlichen gleichem Aufbau wie zu Figur 5 ausgeführt ist der Drei-Wege-Katalysator 50 im Abgaskanal 46 durch einen Vier-Wege-Katalysator 52 ersetzt.

Figur 9 zeigt ein weiteres Ausführungsbeispiel für einen Verbrennungsmotor 10 mit einem Ansaugtrakt 20 und einer Abgasanlage 40. Bei ansonsten gleichem Aufbau wie zu Figur 1 ausgeführt ist anstelle eines Drei-Wege-Katalysators 50 ein Vier-Wege-Katalysator 52 im Abgaskanal 46 stromabwärts der Turbine 48 angeordnet.

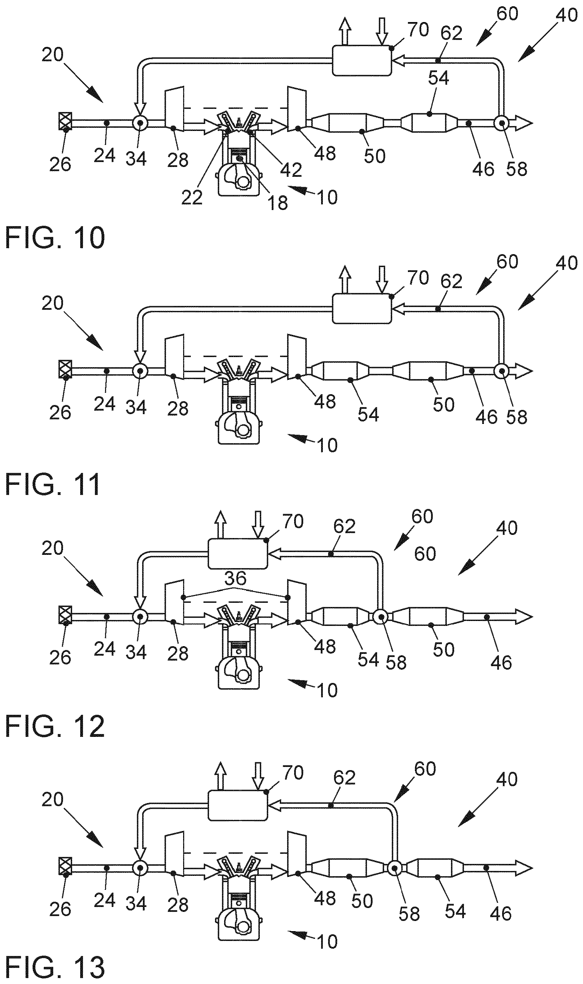

Figur 10 zeigt ein weiteres Ausführungsbeispiel für einen Verbrennungsmotor 10 mit einem Ansaugtrakt 20 und einer Abgasanlage 40. Bei ansonsten gegenüber dem in Figur 1 dargestellten Verbrennungsmotor 10 unverändertem Aufbau ist in der Abgasanlage 40 stromabwärts des Drei-Wege-Katalysators 50 ein Ottopartikelfilter 54 angeordnet, wobei die Abgasrückführung 60 stromabwärts des Ottopartikelfilters 54 aus dem Abgaskanal 46 abzweigt. Diese Anordnung hat den Vorteil, dass das Abgas des Verbrennungsmotors 10 zusätzlich von Feststoffen befreit wird, sodass die Gefahr von Beschädigungen durch Partikel, welche über die Abgasrückführung 60 zurück in den Ansaugtrakt 20 gelangen, deutlich reduziert ist.

In Figur 11 ist ein alternatives Ausführungsbeispiel eines Verbrennungsmotors 10 dargestellt. Dabei sind bei ansonsten unverändertem Aufbau die Positionen des Ottopartikelfilters 54 und des Drei-Wege-Katalysators 50 vertauscht.

In Figur 12 ist ein weiteres Ausführungsbeispiel eines Verbrennungsmotors 10 dargestellt, in dessen Abgasanlage 40 stromabwärts der Turbine 48 des Abgasturboladers 36 ein Ottopartikelfilter 54 und stromabwärts ein Drei-Wege-Katalysator 50 angeordnet sind. Dabei ist die Verzweigung 58 am Abgaskanal 46, an welcher die Abgasrückführungsleitung 62 der Abgasrückführung 60 aus dem Abgaskanal abzweigt, stromabwärts des Ottopartikelfilters 54 und stromaufwärts des Drei-Wege-Katalysators 50 vorgesehen. Auch diese Anordnung hat den Vorteil, dass das Abgas des Verbrennungsmotors 10 zusätzlich von Feststoffen befreit wird, bevor es in die Abgasrückführung 60 gelangt, sodass die Gefahr von Beschädigungen durch Partikel, welche über die Abgasrückführung 60 zurück in den Ansaugtrakt 20 gelangen, deutlich reduziert ist.

Figur 13 zeigt ein weiteres Ausführungsbeispiel eines Verbrennungsmotors 10. Bei im Wesentlichen gleichem Aufbau wie zu Figur 10 ausgeführt zweigt hier die Abgasrückführung 60 stromabwärts des Drei-Wege-Katalysators 50 und stromaufwärts des Ottopartikelfilters 54 aus dem Abgaskanal 46 ab.

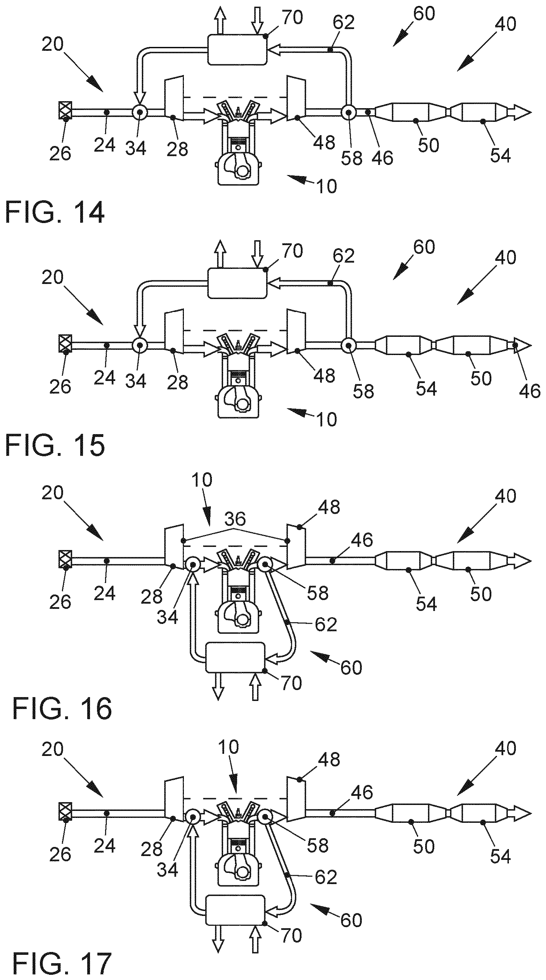

Alternativ ist auch eine Ausführung der Abgasanlage 40 wie in Figur 14 dargestellt möglich. Dabei ist die Verzweigung 58, an welcher die Abgasrückführungsleitung 62 aus dem Abgaskanal 46 abzweigt, stromabwärts der Turbine 48 und stromaufwärts des Drei-Wege-Katalysators 50 und des Ottopartikelfilters 54 ausgebildet.

Figur 15 zeigt einen Verbrennungsmotor 10 mit einer Abgasanlage 40, welche im Wesentlichen der Ausführung zu Figur 14 entspricht. Dabei ist der Ottopartikelfilter 54 jedoch in Strömungsrichtung des Abgases durch den Abgaskanal 46 stromaufwärts des Drei-Wege-Katalysators 50 angeordnet.

In Figur 16 ist ein weiteres alternatives Ausführungsbeispiel für einen Verbrennungsmotor 10 mit einem Ansaugtrakt 20 und einer Abgasanlage 40 dargestellt. Bei im Wesentlichen gleichem Aufbau wie zu Figur 3 ausgeführt ist in diesem Ausführungsbeispiel stromabwärts der Turbine 48 des Abgasturboladers 36 und stromaufwärts des Drei-Wege-Katalysators 50 ein zusätzlicher Ottopartikelfilter 54 angeordnet.

In Figur 17 ist ein weiteres Ausführungsbeispiel für einen Verbrennungsmotor 10 mit einer Hochdruck-Abgasrückführung dargestellt. Gegenüber dem Ausführungsbeispiel in Figur 16 sind lediglich die Positionen des Drei-Wege-Katalysators 50 und des Ottopartikelfilters 54 vertauscht, sodass der Drei-Wege-Katalysator 50 stromabwärts der Turbine 48 als erste Komponente der Abgasnachbehandlung durchströmt wird.

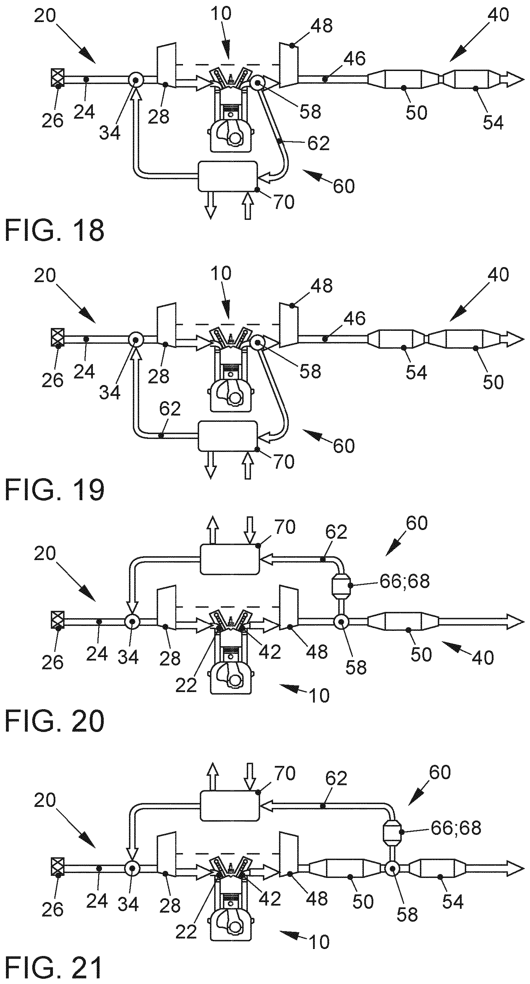

Die in Figur 18 und 19 dargestellten Ausführungsformen des Verbrennungsmotors 10 entsprechen im Wesentlichen der Ausführungsform gemäß Figur 7, wobei anstelle eines Vier-Wege-Katalysators 52 die Funktionen der Abgasreinigung auf einen Drei-Wege-Katalysator 50 und einen Ottopartikelfilter 54 aufgeteilt sind.

In Figur 20 ist ein weiteres Ausführungsbeispiel eines Verbrennungsmotors 10 mit einem Ansaugtrakt 20 und einer Abgasanlage 40 dargestellt. Bei im Wesentlichen gleichem Aufbau wie zu Figur 1 ausgeführt, zweigt die Abgasrückführungsleitung 62 stromabwärts der Turbine 48 und stromaufwärts des Drei-Wege-Katalysators 50 aus dem Abgaskanal 46 ab. Die Abgasrückführung 60 weist zusätzlich einen Abgasrückführungskatalysator 68 und/oder einen Abgasrückführungsfilter 66 auf, mit welchen der über die Abgasrückführung 60 zurückgeführte Abgasstrom zusätzlich gereinigt wird. Diese Ausführungsform bietet den Vorteil, dass das zurückgeführte Abgas von Schadstoffen und Partikeln befreit werden kann. Dabei kann die Klopfneigung des Kraftstoffluftgemischs in den Brennräumen reduziert werden, da das Kraftstoffluftgemisch durch das zurückgeführte Abgas inertisiert wird. Ferner können die Rohemissionen des Verbrennungsmotors 10 gesenkt werden, wenn emissionsbildende Abgaskomponenten durch den Abgasrückführungskatalysator 68 in reaktionsträge Abgaskomponenten konvertiert werden und somit die Neubildung von schädlichen Abgaskomponenten hemmen. Nachteilig an dieser Ausführungsform ist jedoch, dass eine zusätzliche Komponente in der Abgasrückführung 60 in Form eines Abgasrückführungsfilters 66 oder eines Abgasrückführungskatalysators 68 benötigt wird.

In Figur 21 ist ein Ausführungsbeispiel eines Verbrennungsmotors 10 dargestellt, welches im Wesentlichen der Ausführungsform in Figur 13 entspricht, wobei zusätzlich in der

Abgasrückführung 60 ein Abgasrückführungskatalysator 68 und/oder ein Abgasrückführungsfilter 66 angeordnet ist/sind.

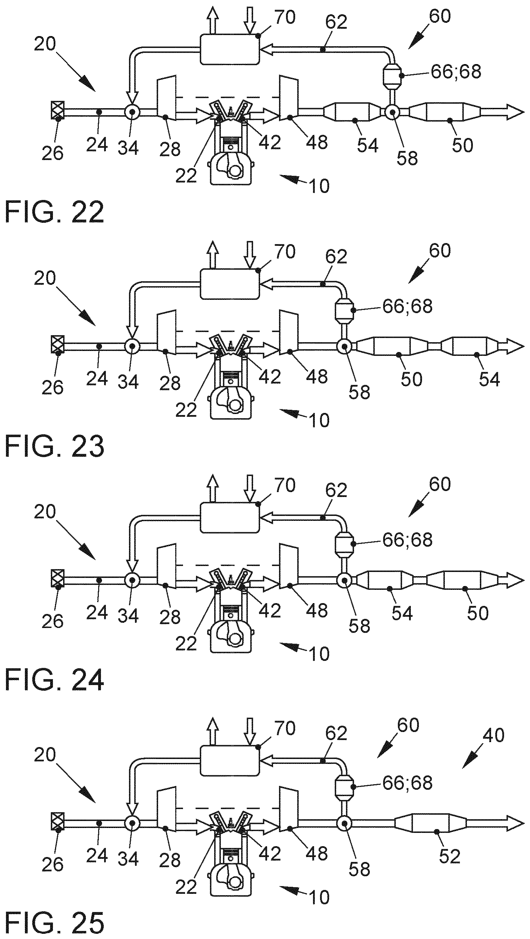

Das Ausführungsbeispiel in Figur 22 entspricht im Wesentlichen dem Ausführungsbeispiel aus Figur 12, das Ausführungsbeispiel in Figur 23 dem Ausführungsbeispiel in Figur 14 und das Ausführungsbeispiel in Figur 24 dem Ausführungsbeispiel in Figur 15, wobei jeweils in der Abgasrückführung 60 ein Abgasrückführungskatalysator 68 und/oder ein Abgasrückführungsfilter 66 angeordnet ist/sind.

In Figur 25 ist ein Ausführungsbeispiel eines Verbrennungsmotors 10 mit einem Ansaugtrakt 20 und einer Abgasanlage dargestellt, welches im Wesentlichen der Ausführungsform gemäß Figur 20 entspricht. Abweichend von der Ausführungsform in Figur 20 ist bei diesem Ausführungsbeispiel ein Vier-Wege-Katalysator 52 anstelle des Drei-Wege-Katalysators 50 in der Abgasanlage 40 vorgesehen.

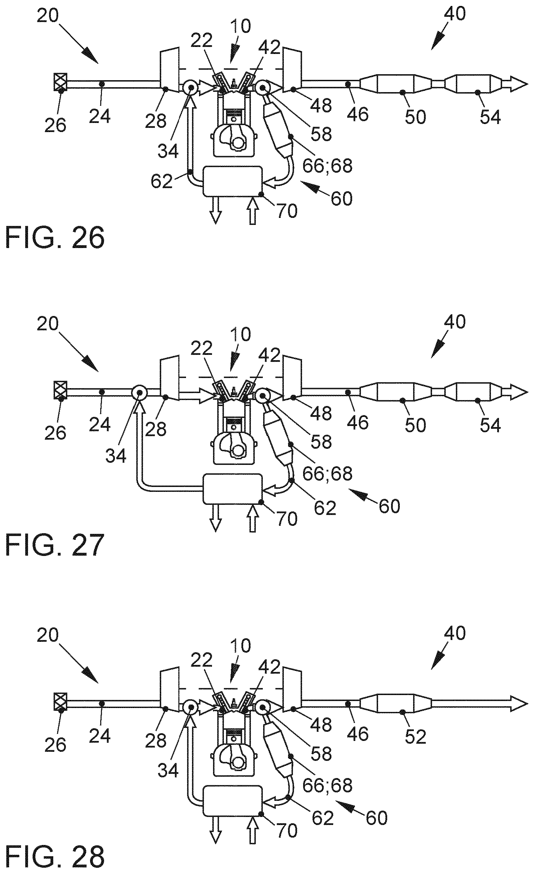

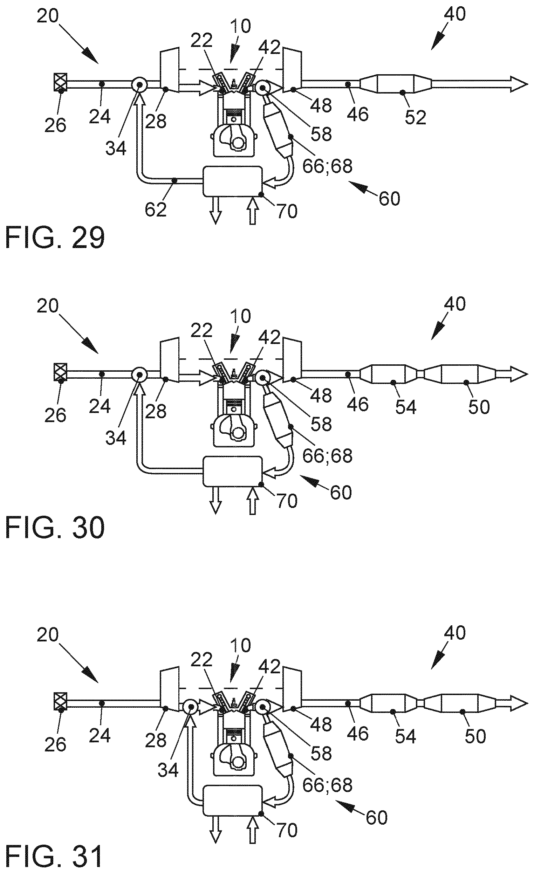

Die Figuren 26 bis 31 zeigen weitere Ausführungsformen eines Verbrennungsmotors 10 mit einem Ansaugtrakt 20 und einer Abgasanlage 40 mit einer Abgasrückführung 60, wobei jeweils in der Abgasrückführung ein Abgasrückführungskatalysator 68 und/oder ein Abgasrückführungsfilter 66 angeordnet ist/sind.

### Bezugszeichenliste

- 10: Verbrennungsmotor
- 12: Brennraum
- 14: Zündkerze
- 16: Kraftstoffinjektor
- 18: Kolben

- 20: Ansaugtrakt
- 22: Einlass
- 24: Ansaugkanal
- 26: Luftfilter
- 28: Verdichter

- 30: Drosselklappe
- 32: Ladeluftkühler
- 34: Einmündung
- 36: Abgasturbolader
- 38: Einlassventil

- 40: Abgasanlage
- 42: Auslass
- 44: Auslassventil
- 46: Abgaskanal
- 48: Turbine

- 50: Drei-Wege-Katalysator
- 52: Vier-Wege-Katalysator
- 54: Ottopartikelfilter
- 56: Abgassensor
- 58: Verzweigung

- 60: Abgasrückführung
- 62: Abgasrückführungsleitung
- 64: Abgasrückführungsventil
- 66: Abgasrückführungsfilter
- 68: Abgasrückführungskatalysator

- 70: Abgasrückführungskühler
- 72: Wärmetauscher
- 74: Zulauf
- 76: Ablauf
- 78: Lambda-Sonde

- 80: Motorsteuergerät
- 82: Temperatursensor
- 84: optionaler Temperatursensor nach AGR-Kühler

- λ_{E}: Verbrennungsluftverhältnis des Verbrennungsmotors
- AGR: Abgasrückführungsrate
- T: Temperatur
- T_{CC}: Temperatur im Brennraum
- T_{EG}: Abgastemperatur
- T_{EGT}: Abgastemperatur stromabwärts der Turbine des Abgasturboladers
- T_{EGK}: Abgastemperatur stromabwärts des Drei-Wege-Katalysators
- ΔT: Abgastemperaturänderung über den Katalysator

## Patentansprüche

1. Verfahren zur Abgasnachbehandlung eines Verbrennungsmotors (10) mit mindestens einem Brennraum (12), dessen Einlass (22) mit einem Ansaugtrakt (20) und dessen Auslass (42) mit einer Abgasanlage (40) des Verbrennungsmotors (10) verbunden ist, wobei an jedem Brennraum (12) mindestens eine Zündeinrichtung (14) angeordnet ist, um ein stöchiometrisches Verbrennungsluftgemisch in dem Brennraum (12) zu zünden, wobei die Abgasanlage (40) einen Abgaskanal (46) aufweist, in welchem mindestens eine Abgasnachbehandlungskomponente (50, 52, 54) angeordnet ist, und wobei die Abgasanlage (40) über eine Abgasrückführung (60) mit dem Ansaugtrakt (20) verbunden ist, wobei in der Abgasrückführung (60) ein Abgasrückführungskühler (70) angeordnet ist, umfassend folgende Schritte:
- Betreiben des Verbrennungsmotors (10) mit einem stöchiometrischen Verbrennungsluftgemisch (λ = 1), wobei das Abgas des Verbrennungsmotors (10) durch die Abgasnachbehandlungskomponente (50, 52, 54) gereinigt wird,
- Ermitteln eines Betriebspunktes des Verbrennungsmotors (10) bei dem Betrieb des Verbrennungsmotors mit dem stöchiometrischen Verbrennungsluftgemisch (λ = 1) und Ermitteln einer Brennraumtemperatur (T_{CC}) und/oder einer Abgastemperatur (T_{EG}),
- Erhöhen einer Abgasrückführungsrate bei konstantem Lastpunkt des Verbrennungsmotors (10) , um die Abgastemperatur (T_{EG}) zu senken, wenn die Brennraumtemperatur (T_{CC}) oder die Abgastemperatur (T_{EG}) jeweils einen definierten Schwellenwert übersteigt.

2. Verfahren zur Abgasnachbehandlung nach Anspruch 1, **dadurch gekennzeichnet, dass** die Abgasrückführungsrate über ein Abgasrückführungsventil (64) in der Abgasrückführung (60) gesteuert wird.

3. Abgasnachbehandlungssystem für einen Verbrennungsmotor (10) mit mindestens einem Brennraum (12), dessen Einlass (22) mit einem Ansaugtrakt (20) und dessen Auslass (42) mit einer Abgasanlage (40) des Verbrennungsmotors (10) verbunden ist, wobei an jedem Brennraum (12) mindestens eine Zündeinrichtung (14) angeordnet ist, um ein stöchiometrisches Verbrennungsluftgemisch in dem Brennraum (12) zu zünden, wobei die Abgasanlage (40) einen Abgaskanal (46) aufweist, in welchem mindestens eine Abgasnachbehandlungskomponente (50, 52, 54) angeordnet ist, und wobei die Abgasanlage (40) über eine Abgasrückführung (60) mit dem Ansaugtrakt (20) verbunden ist, wobei in der Abgasrückführung (60) ein Abgasrückführungskühler (70) angeordnet ist, und wobei dem Verbrennungsmotor (10) ein Motorsteuergerät (80) zugeordnet ist, mit welchem ein Verfahren nach einem der Ansprüche 1 oder 2 ausgeführt wird, wenn ein maschinenlesbarer Programmcode durch das Motorsteuergerät (80) ausgeführt wird.

4. Abgasnachbehandlungssystem für einen Verbrennungsmotor (10) nach Anspruch 3, **dadurch gekennzeichnet, dass** die Abgasnachbehandlungskomponenten (50, 52, 54) einen Drei-Wege-Katalysator (50) oder einen Drei-Wege-Katalysator (50) und einen Ottopartikelfilter (54) oder einen Vier-Wege-Katalysator (52) umfassen.

5. Abgasnachbehandlungssystem für einen Verbrennungsmotor (10) nach Anspruch 3 oder 4, **dadurch gekennzeichnet, dass** in der Abgasrückführung (60) ein Abgasrückführungsfilter (66) und/oder ein Abgasrückführungskatalysator (68) angeordnet ist.

6. Abgasnachbehandlungssystem für einen Verbrennungsmotor (10) nach einem der Ansprüche 3 bis 5, **dadurch gekennzeichnet, dass** der Abgasrückführungskühler (70) als Wärmetauscher (72) ausgeführt ist, welcher mit dem Kühlmittelkreislauf des Verbrennungsmotors (10) verbunden ist und von dem Kühlmittel des Verbrennungsmotors (10) durchströmt wird.

7. Abgasnachbehandlungssystem für einen Verbrennungsmotor (10) nach einem der Ansprüche 3 bis 6, **dadurch gekennzeichnet, dass** in der Abgasanlage (40) ein Abgassensor (56) angeordnet ist.

8. Abgasnachbehandlungssystem für einen Verbrennungsmotor (10) nach einem der Ansprüche 3 bis 7, **dadurch gekennzeichnet, dass** die Abgasrückführung (60) als Niederdruck-Abgasrückführung ausgebildet ist, wobei die Abgasrückführungsleitung (62) stromabwärts einer Turbine (48) eines Abgasturboladers (36) aus dem Abgaskanal (46) abzweigt und stromaufwärts eines Verdichters (28) des Abgasturboladers (36) in den Ansaugkanal (24) einmündet.

9. Abgasnachbehandlungssystem für einen Verbrennungsmotor (10) nach einem der Ansprüche 3 bis 8, **dadurch gekennzeichnet, dass** die Abgasrückführung (60) stromabwärts eines Ottopartikelfilters (54) oder eines Vier-Wege-Katalysators (52) aus dem Abgaskanal (46) abzweigt.

10. Abgasnachbehandlungssystem für einen Verbrennungsmotor (10) nach einem der Ansprüche 3 bis 7, **dadurch gekennzeichnet, dass** die Abgasrückführung als Hochdruck-Abgasrückführung ausgebildet ist, wobei die Abgasrückführungsleitung (62) stromabwärts eines Auslasses (42) des Verbrennungsmotors (10) und stromaufwärts einer Turbine (48) eines Abgasturboladers (36) aus dem Abgaskanal (46) abzweigt und stromabwärts eines Verdichters (28) des Abgasturboladers (36) in den Ansaugkanal (24) einmündet.

11. Abgasnachbehandlungssystem für einen Verbrennungsmotor (10) nach einem der Ansprüche 3 bis 10, **dadurch gekennzeichnet, dass** im Abgaskanal (46) stromaufwärts eines Drei-Wege-Katalysators (50) oder stromaufwärts eines Vier-Wege-Katalysators (52) eine Lambdasonde (78) angeordnet ist, mit welcher ein stöchiometrisches Verbrennungsluftverhältnis des Verbrennungsmotors (10) eingeregelt wird.

## Claims

1. Method for the exhaust gas aftertreatment of an internal combustion engine (10) having at least one combustion chamber (12), the inlet (22) of which is connected to an intake tract (20) and the outlet (42) of which is connected to an exhaust gas system (40) of the internal combustion engine (10), wherein at least one ignition device (14) is arranged on each combustion chamber (12) to ignite a stoichiometric combustion air mixture in the combustion chamber (12), wherein the exhaust gas system (40) has an exhaust gas duct (46) in which at least one exhaust gas aftertreatment component (50, 52, 54) is arranged, and wherein the exhaust gas system (40) is connected to the intake tract (20) via an exhaust gas recirculation means (60), wherein an exhaust gas recirculation cooler (70) is arranged in the exhaust gas recirculation means (60), comprising the following steps:
- operating the internal combustion engine (10) with a stoichiometric combustion air mixture (λ = 1), wherein the exhaust gas of the internal combustion engine (10) is cleaned by the exhaust gas aftertreatment component (50, 52, 54),
- determining an operating point of the internal combustion engine (10) during operation of the internal combustion engine with the stoichiometric combustion air mixture (λ = 1) and determining a combustion chamber temperature (Tcc) and/or an exhaust gas temperature (T_{EG}),
- increasing the exhaust gas recirculation rate at a constant load point of the internal combustion engine (10) to reduce the exhaust gas temperature (T_{EG}) if the combustion chamber temperature (Tcc) or the exhaust gas temperature (T_{EG}) exceeds a defined threshold.

2. Method for exhaust gas aftertreatment according to claim 1, **characterized in that** the exhaust gas recirculation rate is controlled via an exhaust gas recirculation valve (64) in the exhaust gas recirculation means (60).

3. Exhaust gas aftertreatment system for an internal combustion engine (10) having at least one combustion chamber (12), the inlet (22) of which is connected to an intake tract (20) and the outlet (42) of which is connected to an exhaust gas system (40) of the internal combustion engine (10), wherein at least one ignition device (14) is arranged on each combustion chamber (12) to ignite a stoichiometric combustion air mixture in the combustion chamber (12), wherein the exhaust gas system (40) has an exhaust gas duct (46) in which at least one exhaust gas aftertreatment component (50, 52, 54) is arranged, and wherein the exhaust gas system (40) is connected to the intake tract (20) via an exhaust gas recirculation means (60), wherein an exhaust gas recirculation cooler (70) is arranged in the exhaust gas recirculation means (60), and wherein an engine control unit (80) is assigned to the internal combustion engine (10), by means of which a method according to either claim 1 or claim 2 is carried out when a machine-readable program code is executed by the engine control unit (80).

4. Exhaust gas aftertreatment system for an internal combustion engine (10) according to claim 3, **characterized in that** the exhaust gas aftertreatment components (50, 52, 54) comprise a three-way catalyst (50) or a three-way catalyst (50) and a gasoline particulate filter (54) or a four-way catalyst (52).

5. Exhaust gas aftertreatment system for an internal combustion engine (10) according to claim 3 or 4, **characterized in that** an exhaust gas recirculation filter (66) and/or an exhaust gas recirculation catalyst (68) is arranged in the exhaust gas recirculation means (60).

6. Exhaust gas aftertreatment system for an internal combustion engine (10) according to any of claims 3 to 5, **characterized in that** the exhaust gas recirculation cooler (70) is designed as a heat exchanger (72) which is connected to the coolant circuit of the internal combustion engine (10) and is supplied with coolant from the internal combustion engine (10).

7. Exhaust gas aftertreatment system for an internal combustion engine (10) according to any of claims 3 to 6, **characterized in that** an exhaust gas sensor (56) is arranged in the exhaust gas system (40).

8. Exhaust gas aftertreatment system for an internal combustion engine (10) according to any of claims 3 to 7, **characterized in that** the exhaust gas recirculation means (60) is designed as a low-pressure exhaust gas recirculation means, the exhaust gas recirculation line (62) branching off from the exhaust gas duct (46) downstream of a turbine (48) of an exhaust gas turbocharger (36) and entering the intake duct (24) upstream of a compressor (28) of the exhaust gas turbocharger (36).

9. Exhaust gas aftertreatment system for an internal combustion engine (10) according to any of claims 3 to 8, **characterized in that** the exhaust gas recirculation means (60) branches off from the exhaust gas duct (46) downstream of a gasoline particulate filter (54) or a four-way catalytic converter (52).

10. Exhaust gas aftertreatment system for an internal combustion engine (10) according to any of claims 3 to 7, **characterized in that** the exhaust gas recirculation means is designed as a high-pressure exhaust gas recirculation means, the exhaust gas recirculation line (62) branching off from the exhaust gas duct (46) downstream of an outlet (42) of the internal combustion engine (10) and upstream of a turbine (48) of an exhaust gas turbocharger (36) and entering the intake duct (24) downstream of a compressor (28) of the exhaust gas turbocharger (36).

11. Exhaust gas aftertreatment system for an internal combustion engine (10) according to any of claims 3 to 10, **characterized in that** a lambda probe (78) is arranged in the exhaust gas duct (46) upstream of a three-way catalytic converter (50) or upstream of a four-way catalytic converter (52), by means of which probe a stoichiometric combustion air ratio of the internal combustion engine (10) is regulated.

## Revendications

1. Procédé pour le post-traitement des gaz d'échappement d'un moteur à combustion interne (10) comportant au moins une chambre de combustion (12) dont l'entrée (22) est reliée à un conduit d'admission (20) et dont la sortie (42) est reliée à un système d'échappement (40) du moteur à combustion interne (10), dans lequel au moins un dispositif d'allumage (14) est disposé au niveau de chaque chambre de combustion (12) afin d'allumer un mélange d'air de combustion stœchiométrique dans la chambre de combustion (12), dans lequel le système d'échappement (40) présente un canal d'échappement (46) dans lequel est disposé au moins un composant de post-traitement des gaz d'échappement (50, 52, 54), et dans lequel le système d'échappement (40) est relié au conduit d'admission (20) par l'intermédiaire d'un système de recyclage des gaz d'échappement (60), dans lequel un refroidisseur de système de recyclage des gaz d'échappement (70) est disposé dans le système de recyclage des gaz d'échappement (60), comprenant les étapes suivantes :
- fonctionnement du moteur à combustion interne (10) avec un mélange d'air de combustion stœchiométrique (λ = 1), dans lequel les gaz d'échappement du moteur à combustion interne (10) sont purifiés par le composant de post-traitement des gaz d'échappement (50, 52, 54),
- détermination d'un point de fonctionnement du moteur à combustion interne (10) lors du fonctionnement du moteur à combustion interne avec le mélange d'air de combustion stœchiométrique (λ = 1) et détermination d'une température de chambre de combustion (Tcc) et/ou d'une température des gaz d'échappement (T_{EG}),
- augmentation d'une vitesse de recyclage des gaz d'échappement à un point de charge constant du moteur à combustion interne (10) afin d'abaisser la température des gaz d'échappement (T_{EG}) lorsque la température de chambre de combustion (Tcc) ou la température des gaz d'échappement (T_{EG}) dépasse respectivement une valeur seuil définie.

2. Procédé de post-traitement des gaz d'échappement selon la revendication 1, **caractérisé en ce que** la vitesse de recyclage des gaz d'échappement est commandée par l'intermédiaire d'une vanne de recyclage des gaz d'échappement (64) dans le système de recyclage des gaz d'échappement (60).

3. Système de post-traitement des gaz d'échappement pour un moteur à combustion interne (10) comportant au moins une chambre de combustion (12) dont l'entrée (22) est reliée à un conduit d'admission (20) et dont la sortie (42) est reliée à un système d'échappement (40) du moteur à combustion interne (10), dans lequel au moins un dispositif d'allumage (14) est disposé au niveau de chaque chambre de combustion (12) afin d'allumer un mélange d'air de combustion stœchiométrique dans la chambre de combustion (12), dans lequel le système d'échappement (40) présente un canal d'échappement (46) dans lequel est disposé au moins un composant de post-traitement des gaz d'échappement (50, 52, 54), et dans lequel le système d'échappement (40) est relié au conduit d'admission (20) par l'intermédiaire d'un système de recyclage des gaz d'échappement (60), dans lequel un refroidisseur de système de recyclage des gaz d'échappement (70) est disposé dans le système de recyclage des gaz d'échappement (60), et dans lequel un appareil de commande de moteur (80) est associé au moteur à combustion interne (10), avec lequel appareil un procédé selon l'une des revendications 1 ou 2 est exécuté lorsqu'un code de programme lisible par machine est exécuté par l'appareil de commande de moteur (80).

4. Système de post-traitement des gaz d'échappement pour un moteur à combustion interne (10) selon la revendication 3, **caractérisé en ce que** les composants de post-traitement des gaz d'échappement (50, 52, 54) comprennent un catalyseur à trois voies (50) ou un catalyseur à trois voies (50) et un filtre à particules Otto (54) ou un catalyseur à quatre voies (52).

5. Système de post-traitement des gaz d'échappement pour un moteur à combustion interne (10) selon la revendication 3 ou 4, **caractérisé en ce qu'**un filtre de recyclage des gaz d'échappement (66) et/ou un catalyseur de recyclage des gaz d'échappement (68) sont disposés dans le système de recyclage des gaz d'échappement (60).

6. Système de post-traitement des gaz d'échappement pour un moteur à combustion interne (10) selon l'une des revendications 3 à 5,
**caractérisé en ce que** le refroidisseur de système de recyclage des gaz d'échappement (70) est réalisé sous la forme d'un échangeur de chaleur (72) qui est relié au circuit de fluide de refroidissement du moteur à combustion interne (10) et est traversé par le fluide de refroidissement du moteur à combustion interne (10).

7. Système de post-traitement des gaz d'échappement pour un moteur à combustion interne (10) selon l'une des revendications 3 à 6,
**caractérisé en ce qu'**un capteur de gaz d'échappement (56) est disposé dans le système d'échappement (40).

8. Système de post-traitement des gaz d'échappement pour un moteur à combustion interne (10) selon l'une des revendications 3 à 7,
**caractérisé en ce que** le système de recyclage des gaz d'échappement (60) est conçu comme un système de recyclage des gaz d'échappement à basse pression, dans lequel la conduite de système de recyclage des gaz d'échappement (62) bifurque à partir du canal d'échappement (46) en aval d'une turbine (48) d'un turbocompresseur à gaz d'échappement (36) et débouche dans le canal d'admission (24) en amont d'un compresseur (28) du turbocompresseur à gaz d'échappement (36).

9. Système de post-traitement des gaz d'échappement pour un moteur à combustion interne (10) selon l'une des revendications 3 à 8,
**caractérisé en ce que** le système de recyclage des gaz d'échappement (60) bifurque à partir du canal d'échappement (46) en aval d'un filtre à particules Otto (54) ou d'un catalyseur à quatre voies (52).

10. Système de post-traitement des gaz d'échappement pour un moteur à combustion interne (10) selon l'une des revendications 3 à 7,
**caractérisé en ce que** le système de recyclage des gaz d'échappement est conçu comme un système de recyclage des gaz d'échappement à haute pression, dans lequel la conduite de recyclage des gaz d'échappement (62) bifurque à partir du canal d'échappement (46) en aval d'une sortie (42) du moteur à combustion interne (10) et en amont d'une turbine (48) d'un turbocompresseur à gaz d'échappement (36) et débouche dans le canal d'admission (24) en aval d'un compresseur (28) du turbocompresseur à gaz d'échappement (36).

11. Système de post-traitement des gaz d'échappement pour un moteur à combustion interne (10) selon l'une des revendications 3 à 10,
**caractérisé en ce qu'**une sonde lambda (78) est disposée dans le canal d'échappement (46) en amont d'un catalyseur à trois voies (50) ou en amont d'un catalyseur à quatre voies (52), avec laquelle sonde lambda un rapport d'air de combustion stœchiométrique du moteur à combustion interne (10) est régulé.
